(19) Europäisches Patentamt
European Patent Office
Office européen des brevets

(11) **EP 3 800 033 B1**

(12) **EUROPEAN PATENT SPECIFICATION**

(45) Date of publication and mention
of the grant of the patent:
**21.08.2024   Bulletin 2024/34**

(21) Application number: **20198633.8**

(22) Date of filing: **28.09.2020**

(51) International Patent Classification (IPC):
*B29C 64/141* (2017.01)   *B29C 64/268* (2017.01)
*B22F 10/28* (2021.01)   *B22F 12/43* (2021.01)
*B22F 12/44* (2021.01)   *B22F 12/45* (2021.01)
*B22F 12/49* (2021.01)   *B33Y 10/00* (2015.01)
*B33Y 30/00* (2015.01)

(52) Cooperative Patent Classification (CPC):
**B29C 64/141; B22F 10/28; B22F 12/43;**
**B22F 12/44; B22F 12/45; B22F 12/49;**
**B29C 64/268; B33Y 10/00; B33Y 30/00;**
B22F 10/362; B22F 12/17; B22F 12/50; Y02P 10/25

(54) **IRRADIATION TARGET FLYING APPARATUS, THREE-DIMENSIONAL MODELING APPARATUS, AND IRRADIATION TARGET FLYING METHOD**

BESTRAHLUNGSZIELANFLUGVORRICHTUNG, VORRICHTUNG ZUR DREIDIMENSIONALEN MODELLIERUNG UND BESTRAHLUNGSZIELANFLUGVERFAHREN

APPAREIL DE VOL À CIBLE D'IRRADIATION, APPAREIL DE MODÉLISATION TRIDIMENSIONNELLE ET PROCÉDÉ DE VOL À CIBLE D'IRRADIATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:   **30.09.2019   JP 2019180297**
**27.07.2020   JP 2020126406**

(43) Date of publication of application:
**07.04.2021   Bulletin 2021/14**

(73) Proprietor: **Ricoh Company, Ltd.**
**Tokyo 143-8555 (JP)**

(72) Inventors:
• **SUHARA, Hiroyuki**
**Tokyo, 143-8555 (JP)**
• **FUJITA, Takashi**
**Tokyo, 143-8555 (JP)**
• **TAMURA, Asato**
**Tokyo, 143-8555 (JP)**

(74) Representative: **SSM Sandmair**
**Patentanwälte Rechtsanwalt**
**Partnerschaft mbB**
**Joseph-Wild-Straße 20**
**81829 München (DE)**

(56) References cited:
JP-A- 2017 124 416       US-A1- 2018 193 948
US-A1- 2019 001 442      US-B1- 7 014 885

**Description**

BACKGROUND OF THE INVENTION

1. Field of the Invention

An aspect of this disclosure relates to an irradiation target flying apparatus, a three-dimensional modeling apparatus, and an irradiation target flying method.

2. Description of the Related Art

In the fields of, for example, image forming, 3D printers, and printed electronics, there are known technologies for causing various materials to desired positions. For example, Japanese Laid-Open Patent Publication No. 2019-077935 discloses a technology where a predetermined area of a thin layer formed of a powder material is irradiated with a preheating laser beam and the preheated predetermined area is irradiated with a main heating laser beam at a predetermined timing to melt the powder material.

However, with the technology disclosed in Japanese Laid-Open Patent Publication No. 2019-077935, it is not possible to easily control emission of multiple light beams such as a preheating laser beam and a main heating laser beam.

US 7,014,885 B1 discloses a device and method for depositing a material of interest onto a receiving substrate includes a first laser and a second laser, a receiving substrate, and a target substrate. The target substrate comprises a laser transparent support having a back surface and a front surface. The front surface has a coating that comprises the source material, which is a material that can be transformed into the material of interest. The first laser can be positioned in relation to the target substrate so that a laser beam is directed through the back surface of the target substrate and through the laser-transparent support to strike the coating at a defined location with sufficient energy to remove and lift the source material from the surface of the support. The receiving substrate can be positioned in a spaced relation to the target substrate so that the source material is deposited at a defined location on the receiving substrate. The second laser is then positioned to strike the deposited source material to transform the source material into the material of interest.

US 2018/0193948 A1 discloses an apparatus for material deposition on an acceptor surface includes a transparent donor substrate having opposing first and second surfaces, and a donor film on the second surface. The apparatus additionally includes an optical assembly, which is configured to direct a beam of radiation to pass through the first surface of the donor substrate and impinge on the donor film at a location on the second surface so as to induce ejection of droplets of molten material from the donor film at an angle that is not normal to the second surface at the location onto the acceptor surface.

JP 2017-124416 A discloses a laser processing apparatus having a laser beam irradiating means for irradiating a workpiece with a laser beam and a control means for controlling the laser beam irradiating means. The apparatus further includes means for emitting a plurality of laser beams having laser characteristics different from each other from a common emitting unit, and the control means is configured to control the laser beam irradiating means such that one of the plurality of laser beams and another one of the plurality of laser beams are irradiated onto the same location as a portion to be processed.

SUMMARY OF THE INVENTION

The invention is defined by the independent claims. The dependent claims relate to preferred embodiments of the invention.

BRIEF DESCRIPTION OF THE DRAWINGS

FIG. 1 is a drawing illustrating a flying apparatus according to a first embodiment;
FIG. 2 is a drawing illustrating an example of a configuration of an irradiation target supplier;
FIG. 3 is a drawing illustrating an example of a configuration of hybrid light;
FIG. 4 is a drawing illustrating an example of hybrid light generation process;
FIG. 5A is a drawing illustrating an example of irradiation with a flying laser beam;
FIG. 5B is a drawing illustrating an example of irradiation with a fixing laser beam;
FIG. 6 is a drawing illustrating a flying apparatus according to a second embodiment;
FIG. 7 is a drawing illustrating a characteristic value $M^2$ of a laser beam;

FIG. 8 is a drawing illustrating a flying apparatus according to a third embodiment;

FIG. 9 is a drawing illustrating a flying apparatus according to a fourth embodiment;

FIG. 10A is a drawing illustrating an example of a configuration of a laser light source;

FIG. 10B is a graph illustrating an example of a relationship between a temperature and conversion efficiency of a second harmonic;

FIG. 11 is a drawing illustrating a flying apparatus according to a fifth embodiment;

FIG. 12 is a drawing illustrating a time difference between a flying laser beam and a fixing laser beam;

FIG. 13 is a drawing illustrating a three-dimensional modeling apparatus according to a sixth embodiment;

FIG. 14 is a drawing illustrating a flying apparatus according to a seventh embodiment;

FIGs. 15A through 15D are drawings for explaining a flying apparatus according to an eighth embodiment; and

FIGs. 16A and 16B are drawings for explaining a flying apparatus according to a ninth embodiment.

## DESCRIPTION OF THE EMBODIMENTS

An aspect of this disclosure makes it possible to easily control emission of multiple light beams.

Embodiments of the present invention are described below with reference to the accompanying drawings. Throughout the accompanying drawings, the same reference number is assigned to the same component, and repeated descriptions of the component may be omitted.

With the related-art technologies, an extremely accurate control is necessary to irradiate an irradiation target with two light beams that are spatially and temporally related to each other. In an aspect of the present invention, an irradiation target is irradiated with two light beams that are used for different processes and spatially and temporally related to each other.

(IRRADIATION TARGET)

An irradiation target indicates a material on which a desired process is performed by irradiation with light beams. For example, an irradiation target indicates a material that is caused to fly. Examples of irradiation targets include a light absorbing material and a powder material. However, irradiation targets are not limited to these examples, and any substance that can be caused to fly by light may be selected depending on the purpose.

(IRRADIATION TARGET FLYING APPARATUS)

An irradiation target flying apparatus indicates an apparatus that causes an irradiation target to fly. An irradiation target flying apparatus may also include a function to cause an irradiation target to adhere to an adherence target. In the descriptions below, for brevity, an irradiation target flying apparatus is simply referred to as a flying apparatus.

(LIGHT EMITTER)

A light emitter emits multiple light beams including at least a first light beam and a second light beam. The first light beam and the second light beam may be emitted by the same light source or different light sources. The first light beam causes an irradiation target to fly. More specifically, for example, an irradiation target carried on a carrier is irradiated with a flying laser beam to cause the irradiation target to fly toward an adherence target. The second light beam fixes the irradiation target caused to fly by the first light beam. More specifically, for example, the irradiation target caused to fly by the first light beam and landed on the adherence target is irradiated with a fixing laser beam to heat and melt the irradiation target and thereby fix the irradiation target to the adherence target.

(MULTIPLE LIGHT BEAMS)

Multiple light beams include at least a first light beam and a second light beam. In the descriptions below, for brevity, the first light beam and the second light beam are simply referred to as "two light beams" or "hybrid light".

(OPTICAL SCANNER)

An optical scanner scans multiple light beams. Here, "irradiating with two light beams spatially related to each other" indicates that irradiation positions of the two light beams have a predetermined relationship. Examples of the predetermined relationship include a relationship where the irradiation positions of the two light beams are the same and a relationship where the irradiation positions of the two light beams are out of alignment by a predetermined distance.

Also, "irradiating with two light beams temporally related to each other" indicates that irradiation timings of the two light beams have a predetermined relationship. Examples of the predetermined relationship include a relationship where the irradiation timings of the two light beams are the same and a relationship where the irradiation timings of the two light beams are different from each other by a predetermined time.

[FIRST EMBODIMENT]

<CONFIGURATION OF FLYING APPARATUS>

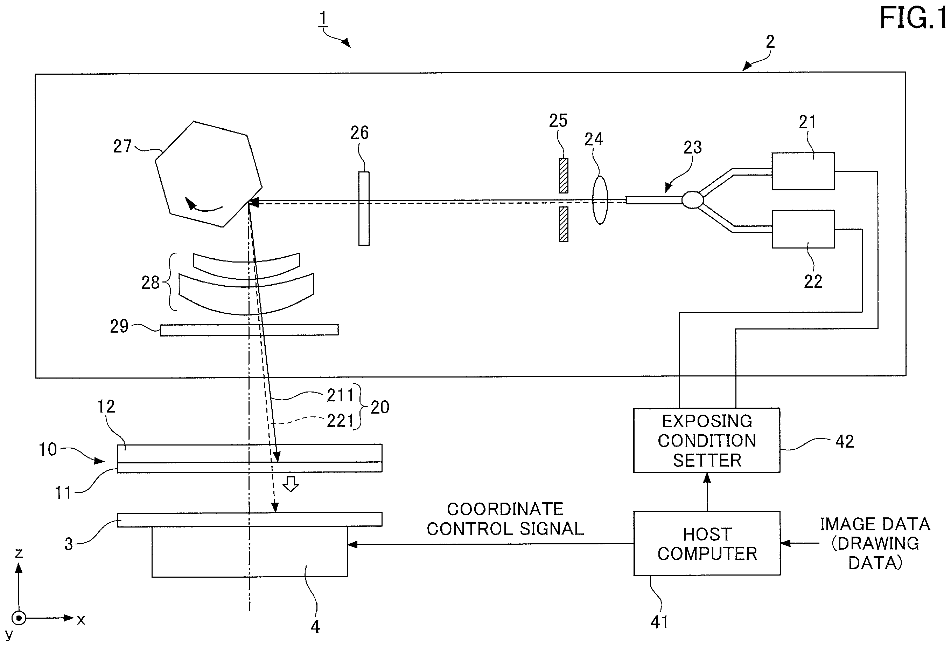

A flying apparatus 1 according to a first embodiment is described. FIG. 1 is a drawing illustrating an example of a configuration of the flying apparatus 1.

In FIG. 1, the flying apparatus 1 includes a light emitter 2, and the light emitter 2 includes a polygon mirror 27 as an optical scanner. The flying apparatus 1 also includes an irradiation target supplier 10, a transparent sheet 12 as a carrier, a stage 4, a host computer 41, and an exposure condition setter 42. The light emitter 2 includes a laser light source 21, a laser light source 22, a fiber combiner 23 as a light guide, a collimator lens 24, an aperture 25, a cylindrical lens 26, a polygon mirror 27 as an optical scanner, scanning lenses 28, and a dust-proof glass 29.

The flying apparatus 1 includes the light emitter 2 that irradiates an irradiation target 11 carried on the transparent sheet 12 used as a carrier with a flying laser beam 211 and irradiates an adherence target 3 placed on the stage 4 , which is movable in the y direction, with a fixing laser beam 221.

The irradiation target 11 is carried on the transparent sheet 12 that constitutes the irradiation target supplier 10 and is supplied to face the adherence target 3. The transparent sheet 12 is a sheet-shaped material that is transparent to at least the flying laser beam 211 and the fixing laser beam 221.

More specifically, the light emitter 2 emits the pulsed flying laser beam 211, which is an example of a first light beam corresponding to the light absorption wavelength of the irradiation target 11, to cause the irradiation target 11 carried on the transparent sheet 12 to fly.

Here, "light beam corresponding to the light absorption wavelength of the irradiation target 11" indicates a light beam having a wavelength that is absorbed by the irradiation target 11 and is, for example, a light beam having a wavelength at which absorption of light by the irradiation target 11 becomes maximum. A light beam having a wavelength with greater light absorption is more preferable to efficiently perform a process of causing the irradiation target 11 to fly and a process of fixing the irradiation target 11 to an adherence target.

The light emitter 2 emits at least the flying laser beam 211 as a first light beam and the fixing laser beam 221 as a second light beam. The light emitter 2 irradiates the irradiation target 11 caused to fly by the irradiation of the flying laser beam 211 and landed on the adherence target 3 with the pulsed fixing laser beam 221 that is a second light beam corresponding to the light absorption wavelength of the irradiation target 11. The unfixed irradiation target 11 landed on the adherence target 3 is heated and melted by irradiation with the fixing laser beam 221 and is then cooled so that the irradiation target 11 is fixed to the adherence target 3.

The flying laser beam 211 and the fixing laser beam 221 have the same wavelength. However, the present invention is not limited to this example, and the flying laser beam 211 and the fixing laser beam 221 may have different wavelengths.

The laser light source 21 is a short pulse laser and emits the flying laser beam 211 by using, for example, a solid-state laser system, a fiber laser system, or a semiconductor laser system. The laser light source 22 is also a short pulse laser and emits the fixing laser beam 221 by using, for example, a solid-state laser system, a fiber laser system, or a semiconductor laser system. The fiber laser system is suitable when a high-speed frequency control or a power modulation control is performed.

The laser beam output ports of the laser light sources 21 and 22 are connected, respectively, to two input ports (+x ends in FIG. 1) of the fiber combiner 23 that is an example of a light guide. The flying laser beam 211 and the fixing laser beam 221 emitted from the laser light sources 21 and 22 are guided into the fiber combiner 23 through the input ports.

The fiber combiner 23 propagates the guided flying laser beam 211 and fixing laser beam 221 to generate hybrid light 20 by coaxially combining the flying laser beam 211 and the fixing laser beam 221, and outputs the hybrid light 20 from an output port (the -x end in FIG. 1).

Here, coaxial laser beams indicate two laser beams whose optical axes are the same. However, the optical axes are not necessarily completely the same, and a difference that is generally recognized as an error caused by a manufacturing error of components may be accepted. In FIG. 1, for descriptive purposes, the flying laser beam 211 and the fixing laser beam 221 are shifted from each other.

The hybrid light 20 emitted from the fiber combiner 23 and spreading in a spherical wave shape passes through the collimator lens 24 and is thereby converted into parallel light.

Converting the hybrid light 20 into parallel light enables the hybrid light 20 to efficiently propagate through subsequent optical systems. Depending on optical systems of the entire apparatus, a collimator lens 24 that converts the hybrid light 20 into divergent light or convergent light instead of parallel light may also be used.

The parallel hybrid light 20 passes through the aperture 25 that functions as a spatial filter and then reaches the cylindrical lens 26.

The cylindrical lens 26 is a lens that converges incident light only in a direction along the y direction and includes a function to correct the influence of inclination of a surface of the polygon mirror 27 in the direction along the y direction.

After passing through the cylindrical lens 26, the hybrid light 20 reaches a light reflecting surface of the polygon mirror 27 used as an optical scanner.

The polygon mirror 27 scans multiple light beams. In the present embodiment, the polygon mirror 27 scans at least the flying laser beam 211 as the first light beam and the fixing laser beam 221 as the second light beam. One polygon mirror 27 scans two light beams. The polygon mirror 27 is rotatable by a drive unit such as a motor and has a regular hexagonal cross-sectional shape. The polygon mirror 27 includes a light reflecting surface on each side (each of six sides in the present embodiment) of the regular hexagonal shape. The hybrid light 20 reaching the position of the rotating polygon mirror 27 is reflected by one of the six light reflecting surfaces. The reflection angle depends on the angle of the light reflecting surface at the moment of reflection, and changes as the polygon mirror 27 rotates. Accordingly, the hybrid light 20 reflected by the polygon mirror 27 is scanned in the x direction in FIG. 1.

The scanned light of the hybrid light 20 reflected by any one of the six light reflecting surfaces of the polygon mirror 27 sequentially passes through the scanning lenses 28 and the dust-proof glass 29. Then, the scanned light passes through the transparent sheet 12 and reaches the irradiation target 11 carried on the surface of the transparent sheet 12 facing the adherence target 3. A long lens may be provided after the polygon mirror 27 as necessary.

When the irradiation target 11 is irradiated with the flying laser beam 211 of the hybrid light 20, the irradiation target 11 absorbing the energy of the flying laser beam 211 flies from the transparent sheet 12 toward the adherence target 3 (in a direction indicated by a white arrow in FIG. 1). The flying irradiation target 11 lands on the adherence target 3.

On the other hand, the fixing laser beam 221 of the hybrid light 20 passes through the irradiation target 11 carried on the transparent sheet 12 and irradiates the irradiation target 11 caused to fly by the irradiation of the flying laser beam 211 and landed on the adherence target 3. The irradiation target 11 on the adherence target 3 is heated and melted by the irradiation with the fixing laser beam 221, and is then cooled and fixed to the adhesion target 3.

The light emitter 2 may also include a reflective mirror and a beam shaping optical system. Also, the optical deflector for the optical scanner is not limited to the polygon mirror 27, but may also be implemented by, for example, a galvano mirror.

The host computer 41 obtains image data (drawing data) generated by, for example, a computer aided design (CAD) system from an external apparatus, performs, for example, image processing on the obtained drawing data, and then outputs the drawing data to the exposure condition setter 42. Also, the host computer 41 outputs a coordinate control signal to the stage 4 to control the movement of the stage 4.

The exposure condition setter 42 outputs, to each of the laser light sources 21 and 22, exposure parameters such as an exposing area, a scanning speed, a frequency, a beam diameter, and a light output intensity entered by a user in advance and the drawing data sent from the host computer 41.

The irradiation target supplier 10 may be implemented by any type of component that can supply the irradiation target 11 in an optical path of the flying laser beam 211 and the fixing laser beam 221 between the light emitter 2 and the adherence target 3. For example, the irradiation target 11 may be supplied by a cylindrical carrier or a belt-shaped carrier disposed in the optical path of the flying laser beam 211 and the fixing laser beam 221.

<CONFIGURATION OF IRRADIATION TARGET SUPPLIER>

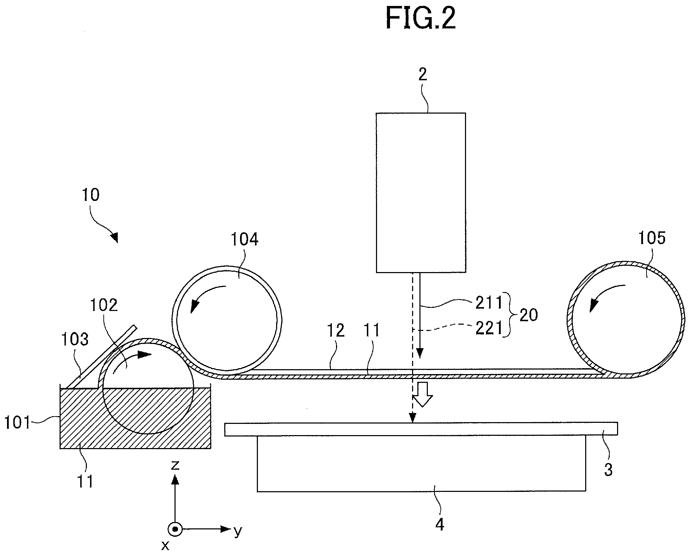

Next, an example of a configuration of the irradiation target supplier 10 is described with reference to FIG. 2. FIG. 2 is a drawing illustrating an example of a configuration of the irradiation target supplier 10.

The irradiation target supplier 10 includes a storage tank 101 that stores the irradiation target 11, a supply roller 102, a regulating blade 103, a sheet feeding roller 104, and a sheet recovering roller 105.

The supply roller 102 is disposed to contact the sheet feeding roller 104, and a portion of the supply roller 102 is immersed in the irradiation target 11 in the storage tank 101. The supply roller 102 is rotated in the direction of an arrow (clockwise direction) by a rotation drive unit or by the rotation of the sheet feeding roller 104 so that the irradiation target 11 adheres to the circumferential surface of the supply roller 102.

The irradiation target 11 adhering to the circumferential surface of the supply roller 102 is made uniform in average thickness by the regulating blade 103, is transferred onto the transparent sheet 12 fed by the sheet feeding roller 104, and is thereby supplied as a layer on the transparent sheet 12. The transparent sheet 12 holds the supplied irradiation target 11 on the surface facing the adherence target 3 by intermolecular force. The force for holding the irradiation target 11 on the transparent sheet 12 may be strengthened by, for example, air adsorption or electrostatic adsorption.

The transparent sheet 12 is wound around the sheet feeding roller 104 in advance, and one end of the wound transparent sheet 12 is connected to the sheet recovering roller 105 that is disposed apart from the sheet feeding roller 104 in the +y direction.

The sheet recovering roller 105 is rotated by a driving unit such as a motor and winds the transparent sheet 12 around itself. As a result of this winding operation, the transparent sheet 12 travels in the +y direction. The sheet feeding roller 104 is rotated by the movement of the transparent sheet 12, and feeds the wound transparent sheet 12 toward the sheet recovering roller 105.

The transparent sheet 12 travels while carrying the irradiation target 11; and at a position facing the light emitter 2 between the sheet feeding roller 104 and the sheet recovering roller 105, the flying laser beam 211 and the fixing laser beam 221 are emitted by the light emitter 2. Then, a process for causing the irradiation target 11 to fly from the transparent sheet 12 and a process for fixing the irradiation target 11 to the adherence target 3 are performed.

The irradiation target 11 supplied to the transparent sheet 12 is continuously supplied by the rotation of the sheet feeding roller 104 to the position where the flying laser beam 211 and the fixing laser beam 221 are emitted. After the processes, the irradiation target 11 is recovered together with the transparent sheet 12 by the sheet recovering roller 105.

<HYBRID LIGHT>

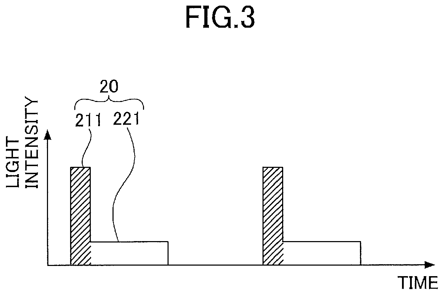

Next, an example of the hybrid light 20 generated by the fiber combiner 23 according to the first embodiment is described with reference to FIGs. 3 through 5B.

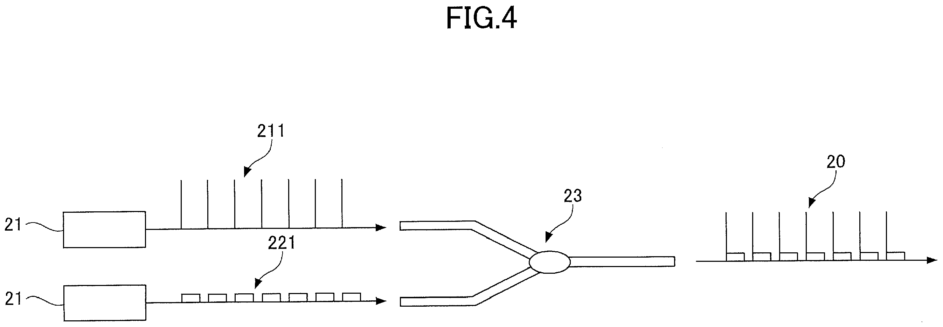

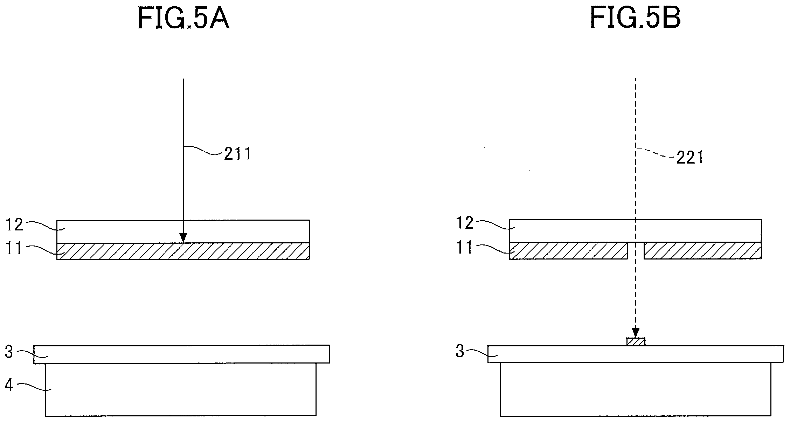

FIG. 3 is a drawing illustrating an example of a configuration of the hybrid light 20, and FIG. 4 is a drawing illustrating an example of a hybrid light generation process. FIGs. 5A and 5B illustrate examples of processes performed using the hybrid light 20. FIG. 5A is a drawing illustrating an example of a process performed using the flying laser beam 211, and FIG. 5B is a drawing illustrating an example of a process performed using the fixing laser beam 221.

As illustrated in FIG. 3, the hybrid light 20 includes the flying laser beam 211 (hatched area) that has a short pulse period and a high peak light intensity and the fixing laser beam 221 that has a long pulse period and a low peak light intensity compared with the flying laser beam 211. In FIG. 3, the horizontal axis indicates time, and the vertical axis indicates light intensity.

Here, the pulse period (light emission period) of the flying laser beam 211 is an example of a predetermined duration, and the pulse period of the fixing laser beam 221 is an example of a duration greater than or equal to the predetermined duration.

As illustrated in FIG. 4, the flying laser beam 211 emitted from the laser light source 21 enters one of the two input ports of the fiber combiner 23. Also, the fixing laser beam 221 emitted from the laser light source 22 enters the other one of the two input ports.

At a position where the branches of the fiber combiner 23 join, the flying laser beam 211 and the fixing laser beam 221 propagating through the fiber combiner 23 are combined. As a result, the hybrid light 20 is generated. The generated hybrid light 20 propagates through the fiber combiner 23 and is then output from the output port.

Further, as illustrated in FIG. 5A, the flying laser beam 211 irradiates a surface of the transparent sheet 12 that is opposite the surface of the transparent sheet 12 facing the adherence target 3. By irradiating the transparent sheet 12 with the flying laser beam 211 having a short pulse period and a high peak light intensity, high energy is applied in a short period of time to the irradiation target 11 via the transparent sheet 12.

Due to the ablation effect or the light radiation pressure caused by the applied energy, the adhesion force (holding force) of the irradiation target 11 adhering to the transparent sheet 12 is released, and the irradiation target 11 drops downward due to gravity and flies.

Also, as illustrated in FIG. 5B, the fixing laser beam 221 passes through the transparent sheet 12 in a direction facing the adherence target 3 and irradiates the irradiation target 11 landed on the adherence target 3.

Scanning the flying laser beam 211 and the fixing laser beam 221 having a common axis by using one polygon mirror 27 makes it possible to make the irradiation positions of the scanned flying laser beam 211 and the scanned fixing laser beam 221 accurately match each other. In FIG. 5B, the fixing laser beam 221 passes through a portion where the irradiation target 11 on the transparent sheet 12 is caused to fly and removed by the irradiation of the flying laser beam 211, and reaches the irradiation target 11 landed on the adherence target 3.

Irradiating the irradiation target 11 landed on the adherence target 3 with the fixing laser beam 221 having a long pulse period and a low peak light intensity makes it possible to apply heat energy corresponding to the pulse period to the irradiation target 11. When the temperature of the irradiation target 11 is increased by the applied heat energy and reaches a temperature higher than or equal to the melting point, the irradiation target 11 melts. The melted irradiation target 11 is then cooled and fixed to the adherence target 3.

Here, in FIGs. 3 and 4, it is assumed that the fixing laser beam 221 has a long pulse period and a low peak light intensity compared with the flying laser beam 211. However, the fixing laser beam 221 may be continuous wave (CW) light that continuously oscillates.

Also, although two laser light sources 21 and 22 are used in the above example, the present invention is not limited to this example. As another example, an electric current on which an offset signal and a pulse signal are superimposed may be input to a laser light source such as a semiconductor laser so that CW light is oscillated by the offset signal and pulsed light is oscillated by the pulse signal, and hybrid light may be generated by combining the CW light and the pulsed light.

Also, the flying laser beam 211 with the short pulse period is preferably emitted at an early timing in the long pulse period of the fixing laser beam 221 so that the irradiation target 11 can be irradiated with the fixing laser beam 221 after the irradiation target 11 caused to fly by the flying laser beam 211 lands on the adherence target 3.

Such adjustment of the irradiation timings of the flying laser beam 211 and the fixing laser beam 221 can be easily performed by adjusting the emission timing of one of the laser light sources 21 and 22.

<ADVANTAGES OF FLYING APPARATUS>

As described above, in the flying apparatus 1, the irradiation target 11 carried on the transparent sheet 12 is irradiated with the flying laser beam 211 to cause the irradiation target 11 to fly toward the adherence target 3. Also, the irradiation target 11 landed on the adherence target 3 is heated and melted by irradiation with the fixing laser beam 221 and is thereby fixed to the adherence target 3. To irradiate the landed irradiation target 11 with the fixing laser beam 221 and fix the irradiation target 11 to the adherence target 3, it is preferable to accurately set the relationships between the irradiation position and the irradiation timing of the flying laser beam 211 and the irradiation position and the irradiation timing of the fixing laser beam 221.

If the flying laser beam 211 and the fixing laser beam 221 are scanned with different optical deflectors as in the related art, it is necessary to extremely accurately control, for example, the emission of laser light sources and the rotations of polygon mirrors to accurately set the relationships between the irradiation positions and the irradiation timings of scanned light beams. Such a control method may complicate the device configuration and increase the device costs.

In the present embodiment, each of the flying laser beam 211 and the fixing laser beam 221 is scanned using the polygon mirror 27 that is a common optical scanner. This configuration makes it possible to accurately and easily set the relationships between the irradiation positions and the irradiation timings of scanned light beams.

In other words, the present embodiment makes it possible to accurately and easily set the spatial and temporal relationships between the flying laser beam 211 for causing the irradiation target 11 to fly and the fixing laser beam 221 for fixing the irradiation target 11 to the adherence target 3. This makes it possible to prevent the device configuration from becoming complicated and prevent an increase in the device costs. The device costs can also be reduced by using common components such as the polygon mirror 27 and the scanning lenses 28.

Also, in the present embodiment, the fiber combiner 23 causes the optical axis of the flying laser beam 211 and the optical axis of the fixing laser beam 221 to match each other and guides the flying laser beam 211 and the fixing laser beam 221 to the polygon mirror 27. Scanning the flying laser beam 211 and the fixing laser beam 221 having the common optical axis with the common polygon mirror 27 makes it possible to make the positions of scanned light beams accurately match each other without performing any special control.

In the present embodiment, the fiber combiner 23 is used as an example of a light guide. However, the present invention is not limited to this example, and the light guide may be implemented by an optical element such as a beam splitter.

Also, in the present embodiment, the irradiation target 11 is carried on a surface of the transparent sheet 12 facing the adherence target 3, and the scanned light of the flying laser beam 211 irradiates the surface of the transparent sheet 12 that is opposite the surface facing the adherence target 3. Further, the irradiation target 11 landed on the adherence target 3 is irradiated with the scanned light of the fixing laser beam 221 through the transparent sheet 12 from a direction facing the adherence target 3. Disposing the light emitter 2 in a position facing the adherence target 3 across the transparent sheet 12 makes it possible to simplify the configuration of the flying apparatus 1.

Further, in the present embodiment, the hybrid light 20, which includes the flying laser beam 211 having a short pulse period and a high peak light intensity and the fixing laser beam 221 having a long pulse period and a low peak light intensity compared with the flying laser beam 211, is used by the light emitter 2 to perform a process. This configuration makes it possible to easily generate the flying laser beam 211 and the fixing laser beam 221 that have a common axis (coaxial).

The scanning lenses 28 are preferably designed such that the convergence position (beam waist position) of the flying laser beam 211 substantially matches the surface (carrying surface) of the transparent sheet 12 carrying the irradiation target 11. This configuration makes it possible to improve the spatial resolution of the irradiation of the flying laser beam 211 in the carrying surface and to increase the density of the irradiation target 11 fixed to the adherence target 3. Also, this configuration makes it possible to increase the energy per unit area for causing the irradiation target 11 to fly at the convergence position of the flying laser beam 211.

In the present embodiment, the irradiation target 11 landed on the adherence target 3 is heated and melted by irradiation with the fixing laser beam 221 to fix the irradiation target. However, the present invention is not limited to this example. The present embodiment may also be applied to a method where a surface of the adherence target 3 is melted in advance by irradiation with the fixing laser beam 221, the irradiation target 11 is caused to fly and land on the melted surface of the adherence target 3 by irradiation with the flying laser beam 211, and the irradiation target 11 is fixed as the surface of the adherence target 3 cools. In this case, the irradiation timing of the flying laser beam 211 may be delayed relative to the irradiation timing of the fixing laser beam 221.

Further, the process of fixing the irradiation target 11 to the adherence target 3 is not limited to the method where one of the irradiation target 11 and the adherence target 3 is heated and melted with the fixing laser beam 221.

For example, the irradiation target 11 may be formed of a ultra violet (UV) curable resin, and the irradiation target 11 may be cured and fixed with UV light by using a UV laser light source as the laser light source 22 or using a non-laser UV light source instead of the laser light source 22.

Further, the irradiation target 11 may be formed of a thermosetting resin, and the irradiation target 11 may be thermally cured and fixed by using a laser light source that emits a laser beam that is highly absorbable by the thermosetting resin as the laser light source 22 or using a non-laser light source that emits light that is highly absorbable by the thermosetting resin instead of the laser light source 22.

[SECOND EMBODIMENT]

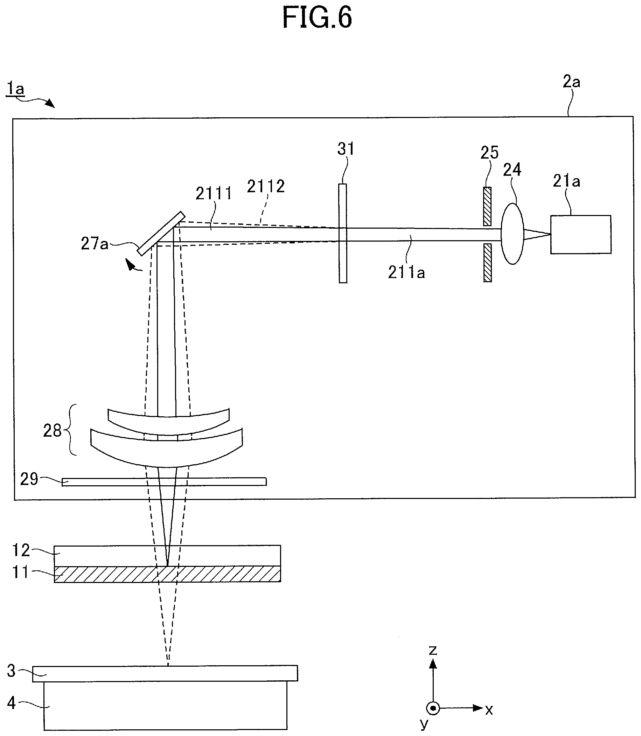

Next, a flying apparatus 1a according to a second embodiment is described with reference to FIG. 6. The same reference numbers as those used in the first embodiment are assigned to the corresponding components in the second embodiment, and repeated descriptions of those components may be omitted. The flying apparatus 1a includes a light emitter 2a, and the light emitter 2a includes a galvano mirror 27a as an optical scanner. Also, the flying apparatus 1a includes a transparent sheet 12 as a carrier and a stage 4. The light emitter 2a includes a laser light source 21a, a collimator lens 24, an aperture 25, a diffractive optical element 31 as an irradiation area setter, scanning lenses 28, and a dust-proof glass 29. The light emitter 2a scans multiple light beams. The light emitter 2a emits at least a flying laser beam 2111 as a first light beam and a fixing laser beam 2112 as a second light beam. The galvano mirror 27a scans the flying laser beam 2111 as the first light beam and the fixing laser beam 2112 as the second light beam. One galvano mirror 27a scans two light beams.

In the present embodiment, the diffractive optical element 31 sets regions for the flying laser beam 2111 and the fixing laser beam 2112 in a flying laser beam 211a emitted from one laser light source 21a. The flying laser beam 2111 irradiates a predetermined area of a surface of the transparent sheet 12 carrying the irradiation target 11 to cause the irradiation target 11 to fly. The fixing laser beam 2112 irradiates a predetermined area on the adherence target 3 to fix the irradiation target 11 to the adherence target 3. The diffractive optical element 31 causes the flying laser beam 2111 to converge on the transparent sheet 12 and causes the fixing laser beam 2112 to converge on the adherence target 3.

FIG. 6 is a drawing illustrating an example of a configuration of the light emitter 2a of the flying apparatus 1a. As illustrated in FIG. 6, the light emitter 2a includes the laser light source 21a that emits the flying laser beam 211a and the diffractive optical element 31 that diffracts the flying laser beam 211a.

The 0th-order diffracted light beam (transmitted light) among diffracted light beams diffracted by the diffractive optical element 31 becomes the flying laser beam 2111 that is a parallel light beam that continues to travel straight even after passing through the diffractive optical element 31. The flying laser beam 2111 is reflected by the galvano mirror 27a, and is then converged by the scanning lenses 28 on the surface of the transparent sheet 12 carrying the irradiation target 11. The converged light beam irradiates the irradiation target 11 carried on the transparent sheet 12 and can cause the irradiation target 11 to fly toward the adherence target 3.

On the other hand, the first-order diffracted light beam among the diffracted light beams diffracted by the diffractive optical element 31 becomes the fixing laser beam 2112 that is a divergent light beam that spreads like a spherical wave after passing through the diffractive optical element 31. After being reflected by the galvano mirror 27a, the fixing laser beam 2112 is converged by the scanning lenses 28 at a position that is farther (in the -z direction) than the convergence position of the flying laser beam 2111. The converged light beam irradiates the irradiation target 11 landed on the adherence target 3 and thereby fixes the irradiation target 11 to the adherence target 3.

Here, because the fixing laser beam 2112 does not converge at the position of the carrying surface, the energy (fluence) applied by irradiation is smaller than the fluence threshold for melting the irradiation target 11. This makes it possible to irradiate the adherence target 3 with the fixing laser beam 2112 while suppressing the influence of the fixing laser beam 2112 on the irradiation target 11 on the carrying surface.

To further suppress the influence of the fixing laser beam 2112 on the irradiation target 11 on the carrying surface, the fixing laser beam 2112 preferably has a shallow focal depth. To reduce the focal depth of the fixing laser beam 2112, it is preferable to use a laser light source 21a that has a large characteristic value $M^2$ (M square) represented by formula (1) below.

8

$$M^2 = (\pi D/2\lambda)\tan(\theta/2) \qquad \cdots(1)$$

Here, in formula (1), D represents a diameter ($\mu$m) of a beam waist, $\theta$ represents a beam divergence full angle (rad), and $\lambda$ represents a wavelength ($\mu$m) of a laser beam.

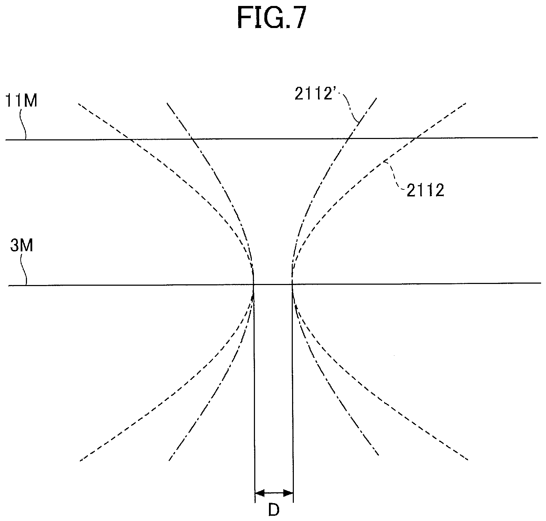

FIG. 7 is a drawing for explaining characteristic values $M^2$ of laser beams and illustrates relationships between the characteristic values $M^2$ and the focal depths when the beam waist diameter D of each laser beam is fixed to a predetermined value.

In FIG. 7, dotted curves indicate the fixing laser beam 2112 whose characteristic value $M^2$ is 1.3, and dashed-dotted curves indicate a fixing laser beam 2112' of a comparative example whose characteristic value $M^2$ is 1.

Also, a straight line 11M indicates the position of the irradiation target 11 carried on the transparent sheet 12 (the position of the carrying surface), and a straight line 3M indicates the surface position of the adherence target 3. In this example, the beam waist position is set at the surface position of the adherence target 3.

The focal depth decreases as the characteristic value $M^2$ increases. Therefore, compared with the fixing laser beam 2112' whose characteristic value $M^2$ is 1, the beam diameter of the fixing laser beam 2112 whose characteristic value $M^2$ is 1.3 increases rapidly as the distance from the beam waist position increases in the optical axis direction.

The fluence per unit area decreases as the beam diameter increases. Therefore, it is possible to reduce the fluence at the position of the irradiation target 11 away from the adherence target 3 corresponding to the beam waist position and suppress the influence of the fixing laser beam 2112 on the irradiation target 11 on the carrier surface by increasing the characteristic value $M^2$.

The above suppressing effect can be achieved by selecting a light source having a desired characteristic value $M^2$ as the laser light source 21a. The characteristic value $M^2$ is not limited to 1.3. Any light source having a characteristic value $M^2$ greater than or equal to a generally-ideal characteristic value $M^2$ may be selected as the laser light source 21a. A light source having a characteristic value $M^2$ greater than or equal to a generally-ideal characteristic value $M^2$ is, for example, a laser light source whose characteristic value $M^2$ is greater than or equal to 1.3.

Effects of the present embodiment other than those described above are the same as the effects described in the first embodiment, and repeated descriptions of the same effects are omitted here.

The present embodiment is preferably applied to a case where the filling rate of the irradiation target 11 on the carrying surface is low and the irradiation target 11 is sparsely carried on the carrying surface, because the loss of the fixing laser beam 2112, which occurs due to light absorption by the irradiation target 11 when the fixing laser beam 2112 passes through the carrying surface, is suppressed.

[THIRD EMBODIMENT]

Next, a flying apparatus 1b according to a third embodiment is described.

In the present embodiment, a concave lens as an example of an irradiation area setter and a beam splitter as an example of a light guide are used. One of laser beams emitted from two laser light sources is used as a flying laser beam to irradiate a predetermined area of the carrying surface of the transparent sheet 12 carrying the irradiation target 11 to cause the irradiation target 11 to fly. Also, another one of the laser beams is used as a fixing laser beam to irradiate a predetermined area of the adhesion target 3 and fix the irradiation target 11 to the adherence target 3.

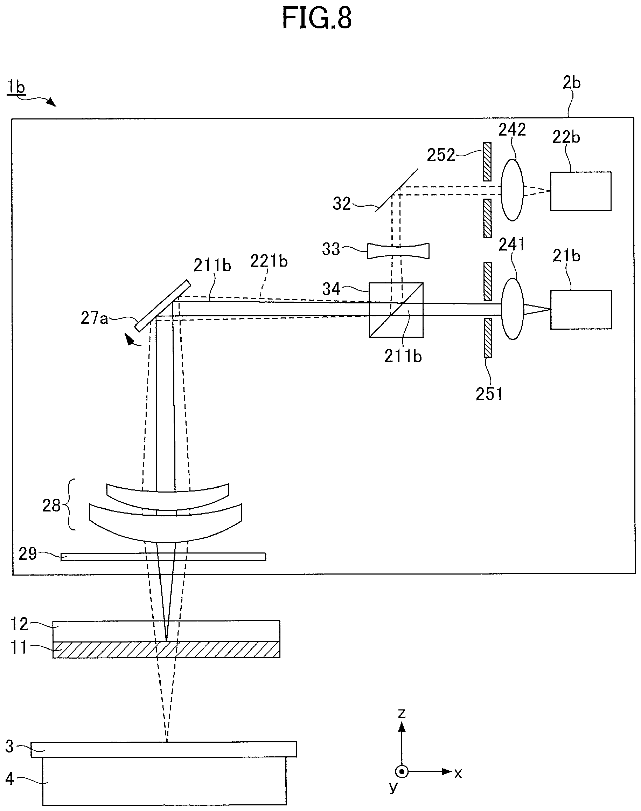

FIG. 8 is a drawing illustrating the flying apparatus 1b according to the third embodiment. The flying apparatus 1b includes a light emitter 2b, and the light emitter 2b includes a galvano mirror 27a as an optical scanner. The flying apparatus 1b also includes a transparent sheet 12 as a carrier and a stage 4. The light emitter 2b emits at least a flying laser beam 211b as a first light beam and a fixing laser beam 221b as a second light beam. The galvano mirror 27a scans multiple light beams. In the present embodiment, the flying laser beam 211b is scanned as the first light beam and the fixing laser beam 221b is scanned as the second light beam. One galvano mirror 27a scans two light beams.

As illustrated in FIG. 8, the light emitter 2b also includes laser light sources 21b and 22b, collimator lenses 241 and 242, apertures 251 and 252, a mirror 32, a concave lens 33, a beam splitter 34, scanning lenses 28, and a dust-proof glass 29.

The fixing laser beam 221b (dotted line) emitted from the laser light source 22b passes through the collimator lens 242 and the aperture 252 and is then reflected by the mirror 32. Then, the fixing laser beam 221b is converted by the concave lens 33 into a divergent light that spreads like a spherical wave, is reflected by the beam splitter 34, and reaches the galvano mirror 27a.

On the other hand, the flying laser beam 211b (solid line) emitted from the laser light source 21b passes through the collimator lens 241 and the aperture 251, then passes through the beam splitter 34, and reaches the galvano mirror 27a.

The flying laser beam 211b and the fixing laser beam 221b are coaxially combined by the beam splitter 34.

After being reflected by the galvano mirror 27a, the flying laser beam 211b is converged by the scanning lenses 28 on the carrying surface of the transparent sheet 12 carrying the irradiation target 11. The irradiation target 11 carried on the transparent sheet 12 is irradiated with the converged light beam and caused to fly toward the adherence target 3.

On the other hand, the fixing laser beam 221b is reflected by the galvano mirror 27a, and is then converged by the scanning lenses 28 at a position farther (in the - z direction) than the convergence position of the flying laser beam 211b. The irradiation target 11 landed on the adherence target 3 can be fixed to the adherence target 3 by irradiating the irradiation target 11 with the converged light beam.

Thus, in the third embodiment, the flying laser beam 211b that is a parallel light beam and the fixing laser beam 221b that is a divergent light beam are generated by using two light sources and a concave lens, and advantageous effects similar to those of the second embodiment described above can be achieved by using these laser beams. Also, because two light sources are used in the third embodiment, the light sources may be configured to emit light beams with different pulse widths and/or wavelengths, and the laser light source 22b may be configured to emit CW light.

[FOURTH EMBODIMENT]

Next, a flying apparatus 1c according to a fourth embodiment is described.

In the present embodiment, the second harmonic of reference laser light is generated by using a non-linear optical crystal element. The reference laser light is used as a flying laser beam to irradiate a predetermined area of the carrying surface of the transparent sheet 12 carrying the irradiation target 11 to cause the irradiation target 11 to fly. Also, the second harmonic is used as a fixing laser beam to irradiate a predetermined area on the adherence target 3 to fix the irradiation target 11 to the adherence target 3.

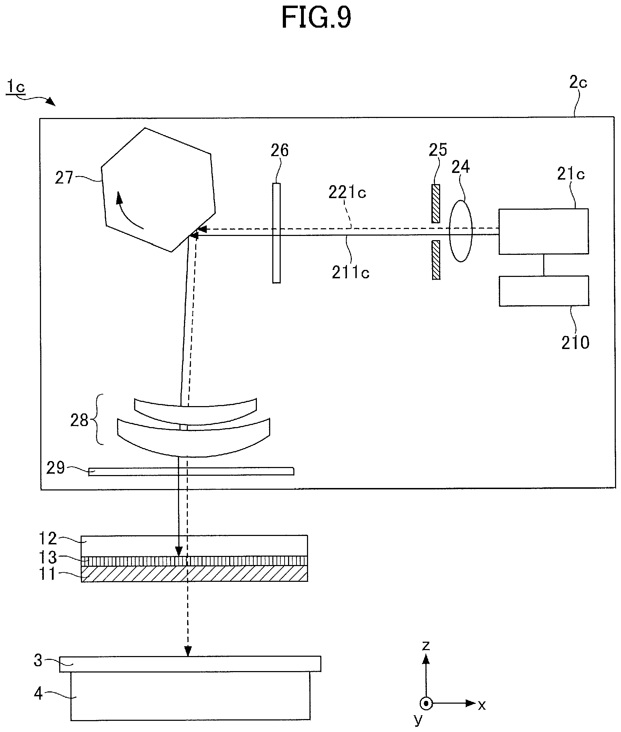

FIG. 9 is a drawing illustrating the flying apparatus 1c. The flying apparatus 1c includes a light emitter 2c, and the light emitter 2c includes a polygon mirror 27 as an optical scanner. The flying apparatus 1c also includes a transparent sheet 12 as a carrier and a stage 4. The light emitter 2c also includes a laser light source 21c, a collimator lens 24, an aperture 25, scanning lenses 28, and a dust-proof glass 29. The light emitter 2c at least emits a flying laser beam 211c as a first light beam and a fixing laser beam 221c as a second light beam. The polygon mirror 27 scans multiple light beams. In the fourth embodiment, at least the flying laser beam 211c as the first light beam and the fixing laser beam 221c as the second light beam are scanned. One polygon mirror 27 scans two light beams.

Also, as illustrated in FIG. 9, the light emitter 2c includes a temperature adjuster 210 for the laser light source 21c. The temperature adjuster 210 adjusts the temperature of the laser light source 21c. Further, the flying apparatus 1c includes a light-absorbing layer 13 disposed on a surface of the transparent sheet 12 facing the adherence target 3, and the transparent sheet 12 carries the irradiation target 11 via the light-absorbing layer 13.

The laser light source 21c emits a flying laser beam 211c which is reference laser light and a fixing laser beam 221c which is a second harmonic of the reference laser light. As an example, the flying laser beam 211c is infrared light having a wavelength of 1064 nm, and the fixing laser beam 221c is green light that is the second harmonic of the infrared light and has a wavelength of 532 nm. Here, the wavelength of the flying laser beam 211c is an example of a first wavelength, and the wavelength of the fixing laser beam 221c is an example of a second wavelength.

Each of the flying laser beam 211c and the fixing laser beam 221c passes through the collimator lens 24, the aperture 25, and the cylindrical lens 26 and enters the polygon mirror 27. Then, the light beams are reflected by the polygon mirror 27, pass through the scanning lenses 28, and irradiate the light-absorbing layer 13.

The green light absorption rate of the light-absorbing layer 13 is higher than its infrared light absorption rate, and the light-absorbing layer 13 selectively absorbs the flying laser beam 211c that is green light among the incident laser beams. Due to the energy absorbed by the light-absorbing layer 13, the carried irradiation target 11 flies toward the adherence target 3. As the light-absorbing layer 13, for example, a polyimide resin that absorbs green light may be used.

In the present embodiment, the light-absorbing layer 13 is provided on the surface of the transparent sheet 12 facing the adherence target 3. However, the light-absorbing layer 13 may be provided on a surface of the transparent sheet 12 that is opposite the surface facing the adherence target 3. However, it is more preferable to provide the light-absorbing layer 13 on the surface facing the adherence target 3 because the energy absorbed by the light-absorbing layer 13 can be directly transferred to the carried irradiation target 11.

In the above example, the light-absorbing layer 13 has a high green light absorption rate. However, the present invention is not limited to this example, and the light-absorbing layer 13 may have a high light absorption rate for a wavelength other than the wavelength of the reference laser light.

On the other hand, the fixing laser beam 221c is not absorbed and passes through the light-absorbing layer 13, and irradiates the adherence target 3. As a result, the irradiation target 11 landed on the adherence target 3 is fixed to the adherence target 3.

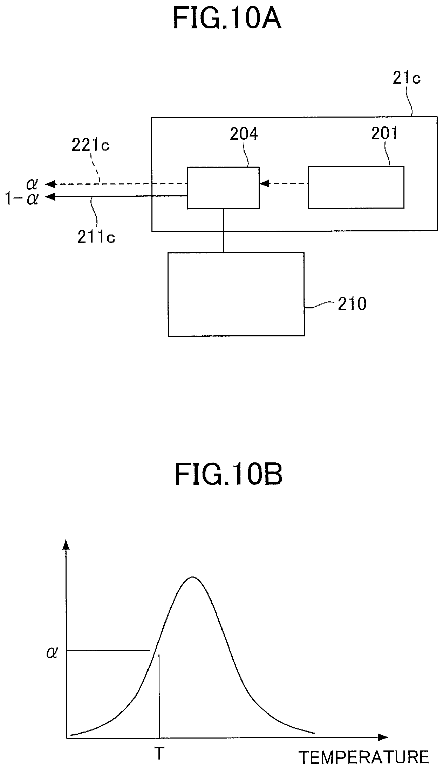

FIGs. 10A and 10B are drawings for explaining the laser light source 21c. FIG. 10A is a drawing illustrating an example of a configuration of the laser light source 21c, and FIG. 10B is a graph illustrating an example of a relationship between a temperature and conversion efficiency of the second harmonic.

As illustrated in FIG. 10A, the laser light source 21c includes a reference laser light source 201 and a non-linear optical crystal element 204.

The reference laser light emitted from the reference laser light source 201 enters the non-linear optical crystal element 204, and the reference laser light and its second harmonic are emitted from the non-linear optical crystal element 204.

The non-linear optical crystal element 204 includes, for example, an LBO (LiB3O5: lithium triborate) crystal. Generally, the reference laser light is removed and only the second harmonic is used. However, in the present embodiment, the reference laser light is used as the flying laser beam 211c, and the second harmonic is used as the fixing laser beam 221c.

The non-linear optical crystal element 204 is connected to the temperature adjuster 210 so that the temperature of the non-linear optical crystal element 204 can be adjusted. For example, a heater is provided in contact with the non-linear optical crystal element 204, and the temperature adjuster 210, which is an example of a light quantity ratio adjuster, heats the non-linear optical crystal element 204 by applying a voltage to the heater. In the case of LBO crystal, the optimum temperature is about 149 degrees, and the conversion efficiency in this case exceeds 50%.

In FIG. 10B, the horizontal axis indicates a temperature, and the vertical axis indicates the conversion efficiency of the second harmonic. As illustrated in FIG. 10B, the conversion efficiency $\alpha$ (%) of the second harmonic can be changed by adjusting a temperature T of the non-linear optical crystal element 204. The conversion efficiency $\alpha$ is an example of a "light quantity ratio". When the conversion efficiency of the second harmonic is $\alpha$, the light intensity of the reference laser light becomes 1-$\alpha$ (%).

Thus, the ratio between the light intensities of the flying laser beam 211c and the fixing laser beam 221c can be changed and optimized by adjusting the temperature T of the non-linear optical crystal element 204.

Effects of the present embodiment other than those described above are the same as the effects described in the first and second embodiments, and repeated descriptions of the same effects are omitted here.

[FIFTH EMBODIMENT]

Next, a flying apparatus 1d according to a fifth embodiment is described.

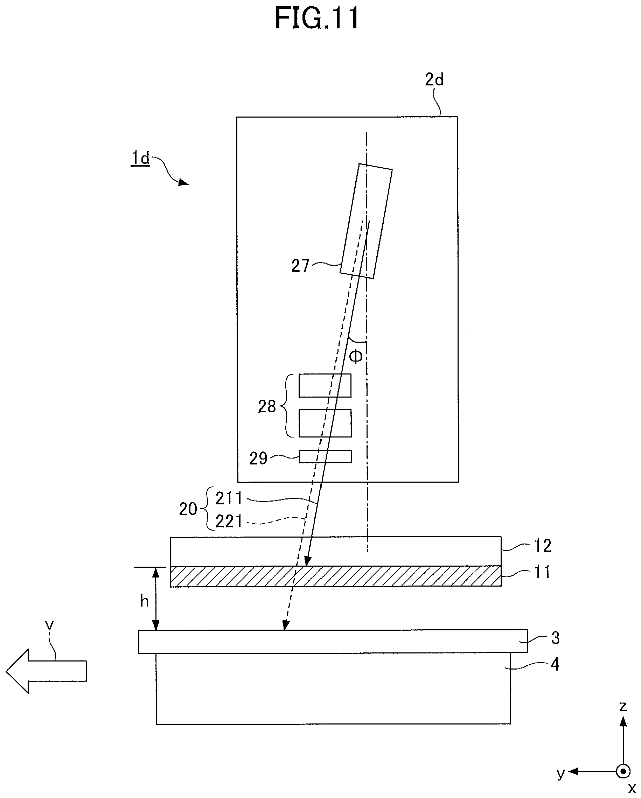

FIG. 11 is a drawing illustrating a flying apparatus 1d according to the fifth embodiment. The flying apparatus 1d includes a light emitter 2d, and the light emitter 2d includes a polygon mirror 27 as an optical scanner. Also, the flying apparatus 1d includes a transparent sheet 12 as a carrier and a stage 4. Further, the light emitter 2d includes a dust-proof glass 29. The light emitter 2d emits at least a flying laser beam 211 as a first light beam and a fixing laser beam 221 as a second light beam. The polygon mirror 27 scans multiple light beams. Here, at least the flying laser beam 211 as the first light beam and the fixing laser beam 221 as the second light beam are scanned. One polygon mirror 27 scans two light beams.

In FIG. 11, the stage 4 moves the placed adherence target 3 in the y direction (a direction indicated by a white arrow) at a moving speed v. The polygon mirror 27 of the light emitter 2d scans the hybrid light 20 in the x direction.

Similarly to the light emitter 2 described in the first embodiment, the light emitter 2d emits the hybrid light 20 that includes the flying laser beam 211 having a short pulse period and a high peak light intensity and the fixing laser beam 221 having a long pulse period and a low peak light intensity compared with the flying laser beam 211.

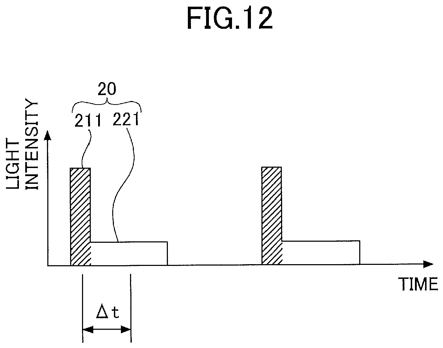

In this case, as illustrated in FIG. 12, there is a time difference $\Delta t$ between the middle timing in the pulse period of the flying laser beam 211 and the middle timing in the pulse period of the fixing laser beam 221.

When the time necessary for the irradiation target 11 to fly from the carrying surface of the transparent sheet 12 and land on the adherence target 3 is ignored, due to the movement of the stage 4, the position of the irradiation target 11 landed on the adherence target 3 is shifted in the +y direction by a movement amount v·$\Delta t$ during the period of the time difference $\Delta t$.

Therefore, when the flying laser beam 211 and the fixing laser beam 221 are emitted coaxially, the fixing laser beam 221 cannot properly irradiate the irradiation target 11 on the adherence target 3, and the process of fixing the irradiation target 11 may not be performed properly.

Therefore, in the present embodiment, as illustrated in FIG. 11, the light emitter 2d emits the hybrid light 20 such that the optical axes of the flying laser beam 211 and the fixing laser beam 221, which are scanned in the scanning direction (x direction) orthogonal to the moving direction (y direction) of the stage 4, are tilted by an irradiation angle $\varphi$ in a direction along the moving direction of the stage 4 with respect to a direction (z direction) that is orthogonal to the moving direction of the stage 4 and the scanning direction. Here, the moving direction of the stage 4 is an example of a predetermined direction, and the irradiation angle $\varphi$ is an example of a predetermined angle.

Tilting the flying laser beam 211 and the fixing laser beam 221 by the irradiation angle $\varphi$ makes it possible to shift the irradiation position of the fixing laser beam 221 on the adherence target 3 in the +y direction by h·tan ($\varphi$) with respect to the irradiation position of the flying laser beam 211 on the carrying surface. Here, h indicates a distance from the carrying surface of the transparent sheet 12 to the surface of the adherence target 3.

The irradiation target 11 landed on the adherence target 3 can be properly irradiated with the fixing laser beam 221 by determining the irradiation angle φ in advance such that the shift amount h·tan (φ) of the irradiation position corresponding to the irradiation angle φ matches the movement amount v·Δt of the irradiation target 11 due to the movement of the stage 4.

Thus, even when there is a time difference between the irradiation timing of the flying laser beam 211 and the irradiation timing of the fixing laser beam 221, the present embodiment makes it possible to properly irradiate the irradiation target 11 on the adherence target 3 with the fixing laser beam 221 and properly perform the fixing process.

Effects of the present embodiment other than those described above are the same as the effects described in the first and second embodiments, and repeated descriptions of the same effects are omitted here.

[SIXTH EMBODIMENT]

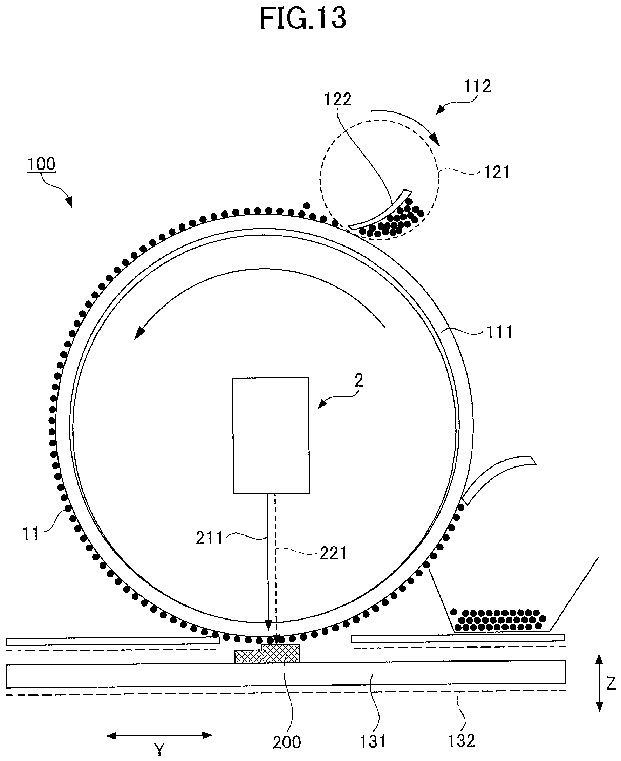

Next, a three-dimensional modeling apparatus 100 according to a sixth embodiment is described with reference to FIG. 13. FIG. 13 is a drawing illustrating a three-dimensional modeling apparatus 100.

The three-dimensional modeling apparatus 100 includes a light emitter 2, and the light emitter 2 includes a polygon mirror 27 as an optical scanner. The light emitter 2 emits at least a flying laser beam 211 as a first light beam and a fixing laser beam 221 as a second light beam. The polygon mirror 27 scans multiple light beams. Here, at least the flying laser beam 211 as the first light beam and the fixing laser beam 221 as the second light beam are scanned. One polygon mirror 27 scans two light beams.

Also, the three-dimensional modeling apparatus 100 includes an irradiation target supplier 112, a carrier 111, a stage 131, and a stage heater 132. Further, the irradiation target supplier 112 includes a mesh roller 121 and a blade 122.

The stage 131 is a support that supports an object 200 to be molded (an object in a molding process). The stage 131 can move back and forth in directions indicated by an arrow Y, and can also move up and down in directions indicated by an arrow Z at, for example, a pitch of 0.05 mm (modeling thickness).

The stage heater 132 is disposed below the stage 131, and the temperature of the stage 131 is controlled to match the temperature of the irradiation target 11 used as a molding material.

The carrier 111 implemented by a rotary part for carrying a particulate irradiation target 11 is disposed above the stage 131. The carrier 111 includes a rotary drum that carries the irradiation target 11 and rotates in a direction (conveying direction) indicated by an arrow to convey the irradiation target 11 to a position above the object 200 on the stage 131. The carrier 111 is transparent and implemented by, for example, a cylindrical glass part. However, the present invention is not limited to this example.

The irradiation target 11 used by the three-dimensional modeling apparatus 100 is selected depending on the object 200 to be modeled. For example, the irradiation target 11 may be a resin such as PA12 (polyamide 12), PBT (polybutylene terephthalate), PSU (polysulfone), PA66 (polyamide 66), PET (polyethylene terephthalate), liquid crystal polymer (LCP), PEEK (polyether ether ketone), POM (polyacetal), PSF (polysulfone), PA6 (polyamide 6), or PPS (polyphenylene sulfide). Also, the irradiation target 11 of the present embodiment is not limited to a crystalline resin, but may also be an amorphous resin such as PC (polycarbonate), ABS (acrylonitrile butadiene styrene), or PEI (polyetherimide); or a mixture of a crystalline resin and an amorphous resin.

In addition to a resin, various materials such as a metal, a ceramic, and a liquid may be used as the irradiation target 11. Further, the irradiation target 11 may be a material having a viscosity greater than or equal to 1 Pa s.

In the present embodiment, the irradiation target 11 is held on the circumferential surface of the carrier 111 by intermolecular force (van der Waals force). Also, when the resistance value of the irradiation target 11 is high, the irradiation target 11 can be held on the carrier 111 only by electrostatic adhesion.

The irradiation target supplier 112 that supplies the irradiation target 11 to the circumferential surface (front surface) of the carrier 111 is disposed around the carrier 111.

The irradiation target supplier 112 includes the mesh roller 121 in which the irradiation target 11 is supplied and that rotates in a direction indicated by an arrow, and the blade 122 that grinds and rubs the irradiation target 11 in the mesh roller 121. The irradiation target supplier 112 grinds and rubs the irradiation target 11 with the blade 122 to loosen the irradiation target 11 and cause the irradiation target 11 to pass through the mesh roller 121 and thereby forms a thin layer of the irradiation target 11 on the circumferential surface of the carrier 111.

The mesh openings of the mesh roller 121 are preferably larger than the average particle diameter of the irradiation target 11 by 20% to 30%. The mesh roller 121 may be formed by knitting metal wires and is more preferably implemented by flat mesh produced by, for example, electroforming.

The supply mechanism of the irradiation target supplier 112 is not limited to a mesh roller. For example, a contact supply method using a rotating body, a non-contact supply method, a spray method using non-contact mesh, or a fluidized dipping method by agitation of powder airflow may also be used.

Inside of the carrier 111, the light emitter 2 is provided as means for causing the irradiation target 11 to fly from the circumferential surface of the carrier 111.

The light emitter 2 has a configuration that is the same as the configuration of any one of the light emitters described in the above embodiments, and emits the pulsed flying laser beam 211 and the pulsed fixing laser beam 221 from the inside of the carrier 111 toward the irradiation target 11. Here, the irradiation position of the fixing laser beam 221 corresponds to the modeling position.

When irradiated with the flying laser beam 211, the irradiation target 11 flies from the circumferential surface of the carrier 111 in a direction in which the flying laser beam 211 is emitted.

The irradiation target 11 landed on the object 200 is heated and melted by irradiation with the fixing laser beam 221. When the irradiation target 11 cools, the irradiation target 11 is integrated with the object 200, and the object 200 grows by at least one unit of the irradiation target 11.

Thus, while conveying the irradiation target 11 by the continuous rotation of the carrier 111, the process of causing the irradiation target 11 to fly with the flying laser beam 211 and the process of heating and melting the landed irradiation target 11 to fix the irradiation target 11 to the surface of the object 200 are repeated until the modeling of the object 200 is completed.

This makes it possible to grow the object 200 to a desired shape and form a three-dimensional object.

In the present embodiment, the irradiation target 11 landed on the object 200 is irradiated and melted with the fixing laser beam 221 to fix the irradiation target 11. However, the present invention is not limited to this example. The present embodiment may also be applied to a method where a surface of the object 200 is melted in advance by irradiation with the fixing laser beam 221, the irradiation target 11 is caused to fly and land on the melted surface of the object 200 by irradiation with the flying laser beam 211, and the irradiation target 11 is fixed as the surface of the object 200 cools. This method can be performed by delaying the irradiation timing of the flying laser beam 211 relative to the irradiation timing of the fixing laser beam 221.

In the present embodiment, the three-dimensional modeling apparatus 100 includes the light emitter 2. However, the three-dimensional modeling apparatus 100 may include at least one of the flying apparatuses 1, 1a, 1b, 1c, and 1d.

[SEVENTH EMBODIMENT]

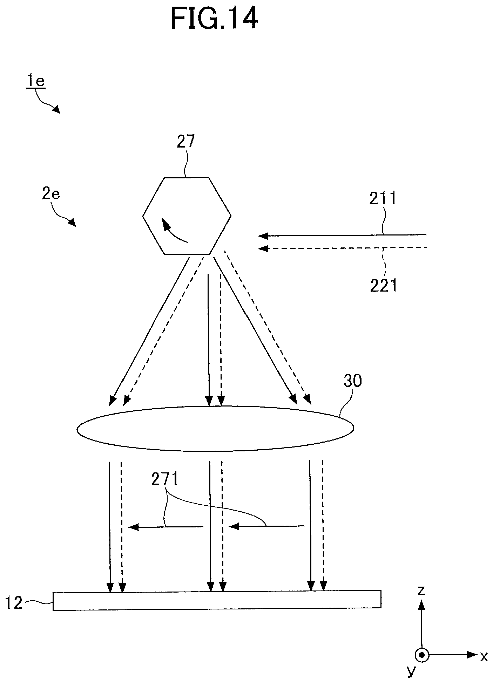

Next, a flying apparatus 1e according to a seventh embodiment is described with reference to FIG. 14. FIG. 14 is a drawing for explaining examples of a flying laser beam and a fixing laser beam used in the flying apparatus 1e. FIG. 14 is a view of the flying apparatus 1e seen from the +y side.

As illustrated in FIG. 14, the flying apparatus 1e includes a light emitter 2e, and the light emitter 2e includes a telecentric lens 30. The flying laser beam 211 and the fixing laser beam 221 are scanned by the rotation of the polygon mirror 27 along a scanning direction 271 (x direction) and enter the telecentric lens 30. The flying laser beam 211 and the fixing laser beam 221 are bent by the telecentric lens 30. The flying laser beam 211 irradiates the transparent sheet 12 and causes the irradiation target carried on the transparent sheet 12 to fly.

In FIG. 14, the optical axis of the flying laser beam 211 is indicated by a solid arrow, and the optical axis of the fixing laser beam 221 is indicated by a dotted arrow.

The telecentric lens 30 is designed and positioned such that its central axis and the principal ray become parallel to each other on the image side (on the side facing the transparent sheet 12). The telecentric lens 30 is an example of a light bending element that bends the flying laser beam 211 and the fixing laser beam 221 scanned by the polygon mirror 27. There is no particular limitation on the material of the telecentric lens 30, and the telecentric lens 30 may include, for example, glass or resin.

In the present embodiment, the optical axis of the flying laser beam 211 and the optical axis of the fixing laser beam 221 bent by the telecentric lens 30 become parallel to each other in the scanning direction 271. This configuration is achieved by, for example, determining the focal length and the position of the telecentric lens 30.

Even when the wavelengths of the flying laser beam 211 and the fixing laser beam 221 are different from each other, this configuration makes it possible to make the flying direction of an irradiation target caused to fly by the flying laser beam 211 match the irradiation direction of the fixing laser beam 221, and thereby makes it possible to reliably irradiate the landed irradiation target with the fixing laser beam 221.

[EIGHTH EMBODIMENT]

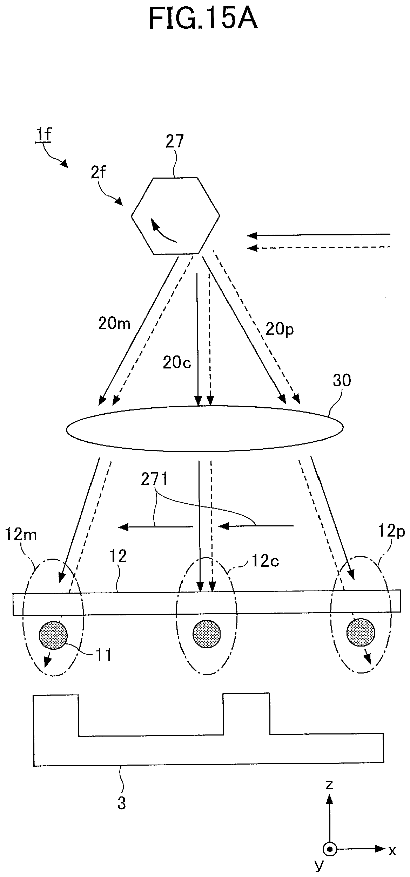

Next, a flying apparatus 1f according to an eighth embodiment is described with reference to FIGs. 15A through 15D.

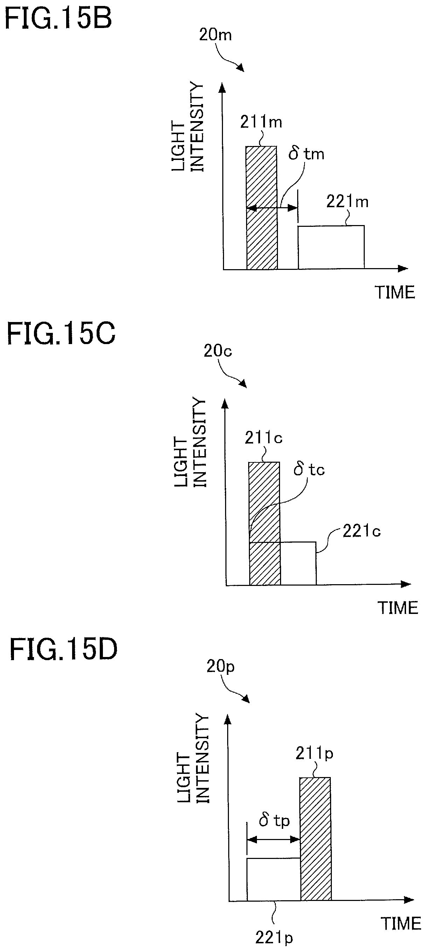

FIGs. 15A through 15D are drawings for explaining an example of the flying apparatus 1f. FIG. 15A is a drawing for explaining positions in a scanning direction. FIG. 15B is a drawing for explaining a first irradiation timing of a fixing laser beam with respect to a flying laser beam. FIG. 15C is a drawing for explaining a second irradiation timing of a fixing laser beam with respect to a flying laser beam, and FIG. 15D is a drawing for explaining a third irradiation timing of a fixing laser beam with respect to a flying laser beam. As illustrated in FIG. 15A, the flying apparatus 1f includes a light emitter 2f.

In FIG. 15A, hybrid light 20p is an instance of hybrid light scanned along the scanning direction 271 by the rotation of the polygon mirror 27 and is directed toward the +x side. The hybrid light 20p passes through the telecentric lens 30 and then reaches an irradiation position 12p on the transparent sheet 12.

Similarly, hybrid light 20m is an instance of hybrid light scanned along the scanning direction 271 by the rotation of the polygon mirror 27 and is directed toward the -x side. The hybrid light 20m passes through the telecentric lens 30 and then reaches an irradiation position 12m on the transparent sheet 12.

The hybrid light 20c is an instance of hybrid light scanned along the scanning direction 271 by the rotation of the polygon mirror 27 and is directed toward the center. The hybrid light 20c passes through the telecentric lens 30 and then reaches an irradiation position 12c on the transparent sheet 12.

In the present embodiment, the irradiation timing of the fixing laser beam with respect to the irradiation timing of the flying laser beam in the hybrid light is changed depending on the position along the scanning direction 271.

Specifically, as illustrated in FIG. 15B, in the hybrid light 20m directed to the irradiation position 12m, the irradiation timing (first irradiation timing) of the fixing laser beam 221m is delayed from the irradiation timing of a flying laser beam 211m by a time difference $\delta tm$.

Also, as illustrated in FIG. 15C, in the hybrid light 20c directed to the irradiation position 12c, the irradiation timing (second irradiation timing) of a fixing laser beam 221c is the same as the irradiation timing of a flying laser beam 211c.

Also, as illustrated in FIG. 15D, in the hybrid light 20p directed to the irradiation position 12p, the irradiation timing (third irradiation timing) of a fixing laser beam 221p is earlier than a flying laser beam 211p by a time difference $\delta tp$.

Here, the irradiation positions 12p, 12c, and 12m correspond to different positions along the scanning direction 271.

Here, the flying laser beam irradiates the transparent sheet 12, and the fixing laser beam irradiates the adherence target 3. Because the irradiation positions of the flying laser beam and the fixing laser beam differ from each other in the z direction, the irradiation positions of the flying laser beam and the fixing laser beam are shifted from each other in the x direction. The distance between the irradiation positions in the x direction increases as the scanning angle increases.

Changing the irradiation timing of the fixing laser beam with respect to the flying laser beam depending on the position along the scanning direction 271 makes it possible to compensate for the misalignment between the irradiation positions of the flying laser beam and the fixing laser beam. This in turn makes it possible to reliably irradiate the irradiation target, which is caused to fly by the flying laser beam and lands on the adherence target 3, with the fixing laser beam.

[NINTH EMBODIMENT]

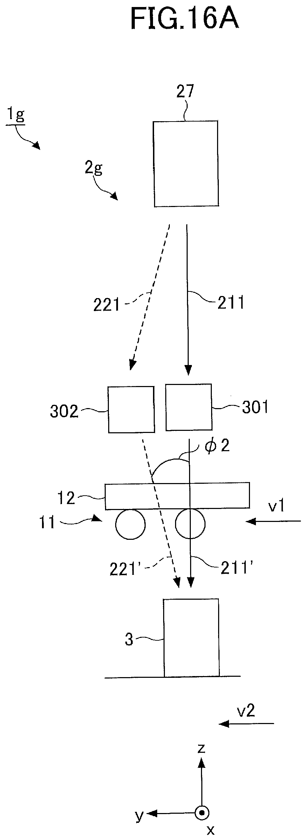

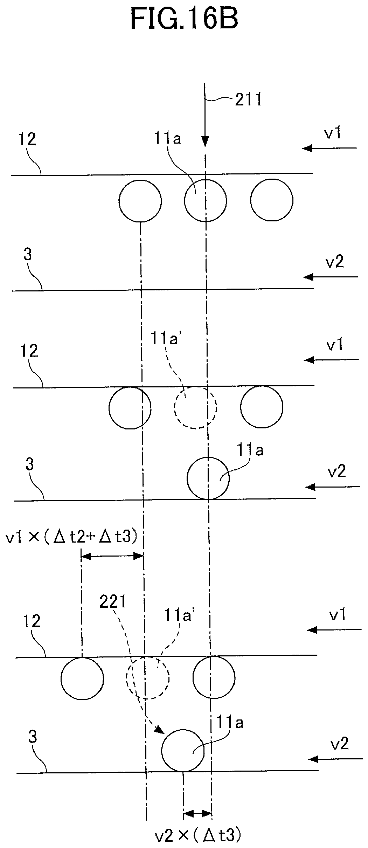

Next, a flying apparatus 1g according to a ninth embodiment is described with reference to FIG. 16. FIGs. 16A and 16B are drawings for explaining an example of the flying apparatus 1g. FIG. 16A is a drawing for explaining irradiation angles of a flying laser beam and a fixing laser beam, and FIG. 16B is a drawing for explaining irradiation timings of the flying laser beam and the fixing laser beam.

As illustrated in FIG. 16A, the flying apparatus 1g includes a light emitter 2g, and the light emitter 2g includes irradiation lenses 301 and 302.

The irradiation lens 301 transmits the flying laser beam 211, and the irradiation lens 302 transmits the fixing laser beam 221. There is no particular limitation on the material of the irradiation lenses 301 and 302.

In the present embodiment, the transparent sheet 12 carrying the irradiation target is moved in a predetermined moving direction (predetermined direction), and the optical axes of the flying laser beam 211 and the fixing laser beam 221 intersect with each other in a plane (which is parallel to the page surface of FIG. 16A) including the moving direction of the transparent sheet 12.

Specifically, as illustrated in FIG. 16A, an optical axis 211' of the flying laser beam 211 after passing through the irradiation lens 301 and an optical axis 221' of the fixing laser beam 221 after passing through the irradiation lens 302 intersect with each other at an angle $\varphi2$ in the plane including the moving direction of the transparent sheet 12. In FIGs. 16A and 16B, v1 indicates the moving speed of the transparent sheet 12, and v2 indicates the moving speed of the adherence target 3.

Here, a flight target 11a is irradiated with the flying laser beam 211 at a predetermined timing (see FIG. 16B (a)), flies from the transparent sheet 12, and lands on the adherence target 3 (see FIG. 16B (b)). The flight target 11a takes a moving time $\Delta t2$ to move from the transparent sheet 12 to the adherence target 3. A gap 11a' in FIG. 16B (b) indicates a gap formed on the transparent sheet 12 when the flight target 11a is caused to fly.

After a time $\Delta t2+\Delta t3$ from the irradiation with the flying laser beam 211, the fixing laser beam 221 passes through the gap 11a' and irradiates the flight target 11a landed on the adherence target 3 (FIG. 16B (c)).

Even when the transparent sheet 12 and the adherence target 3 are configured to move, this configuration makes it possible to reliably irradiate the flight target 11a landed on the adherence target 3 with the fixing laser beam 221.

Irradiation target flying apparatuses and a three-dimensional modeling apparatus according to the embodiments of the present invention are described above. However, the present invention is not limited to the specifically disclosed embodiments, and variations and modifications may be made without departing from the scope of the present invention.

The first through fifth embodiments may be combined with each other. For example, hybrid light including laser beams with different pulse widths according to the first embodiment or reference laser light and its second harmonic according to the fourth embodiment may be applied to a configuration including an irradiation area setter according to the second embodiment.

Also, the flying apparatuses described in the first through fifth embodiments may be applied not only to the three-dimensional modeling apparatus described in the sixth embodiment but also to, for example, an image forming apparatus and an apparatus for printed electronics.

In the above embodiments, the process of causing an irradiation target carried on a carrier to fly by irradiating the irradiation target with a laser beam is referred to as a first process, and the process of fixing the irradiation target landed on an adherence target to the adherence target is referred to as a second process. However, the present invention is not limited to this example. Alternatively, a preheating process in a three-dimensional modeling apparatus using a laser sintering method or an electron beam sintering method may be referred to as a first process, and a main heating process may be referred to as a second process. Further, the first process and the second process may be the same process.

**Claims**

1. A system comprising an apparatus (1) and an irradiation target (11) carried on a carrier (12), the apparatus (1) comprising:

   a light emitter (2) comprising a first laser light source (21) configured to emit a first light beam (211) and a second laser light source (22) configured to emit a second light beam (221);
   an optical scanner (27) configured to scan the first and second light beams (211, 221); and
   a diffractive optical element configured to cause the first light beam to converge on the carrier (12) and cause the second light beam to converge on an adherence target (3),
   wherein the light emitter is configured to cause the irradiation target (11) to fly by causing the first laser light source (21) to emit light on a surface carrying the irradiation target as a converging surface and the second laser light source (22) to emit light on the adherence target as a converging surface to fix the irradiation target to the adherence target.

2. The system as claimed in claim 1, further comprising:

   a light guide (23) configured to make optical axes of the first light beam and the second light beam match each other and guide the first light beam and the second light beam having the matched optical axes to the optical scanner (27),
   wherein the optical scanner (27) is configured to scan both of the first light beam and the second light beam having the matched optical axes.

3. The system as claimed in claim 1, wherein

   the carrier (12) includes a first surface facing the adherence target (3) and a second surface opposite the first surface and carries the irradiation target (11) on the first surface; and
   the light emitter (2) is configured to irradiate the second surface of the carrier (12) with the first light beam and to irradiate the adherence target (3) with the second light beam through the carrier (12).

4. The system as claimed in claim 1 or 3, wherein the second light beam is a laser beam that heats and melts the irradiation target (11).

5. The system as claimed in any one of claims 1 through 4, wherein

   the adherence target is configured to be moved in a predetermined direction; and
   the light emitter is configured to emit the first light beam and the second light beam such that optical axes of the first light beam and the second light beam scanned in a scanning direction orthogonal to the predetermined direction are tilted by a predetermined angle in a direction along the predetermined direction with respect to a direction that is orthogonal to both of the predetermined direction and the scanning direction.

6. The system as claimed in claim 1, wherein the second light beam has a predetermined characteristic value

$$M^2 = (\pi D/2\lambda)\tan(\theta/2) \quad ,$$

wherein D represents a diameter of the beam waist, $\theta$ represents the beam divergence full angle and $\lambda$ represents the wavelength of the laser beam.

7. The system as claimed in any one of claims 1 through 6, wherein

the first light beam is pulsed light with a predetermined duration; and
the second light beam is pulsed light with a duration greater than or equal to the predetermined duration or continuous wave light.

8. The system as claimed in any one of claims 1 through 7, wherein the first light beam and the second light beam have a same wavelength corresponding to a light absorption wavelength of the irradiation target (11).

9. The system as claimed in any one of claims 1 through 7, wherein

the first light beam has a first wavelength corresponding to a light absorption wavelength of the irradiation target (11); and
the second light beam has a second wavelength different from the first wavelength.

10. The system as claimed in claim 9, further comprising:
a non-linear optical crystal element configured to generate a second harmonic of the first light beam as the second light beam.

11. A three-dimensional modeling apparatus, comprising:
the system as claimed in any one of claims 1 through 10.

12. A method performed by a system comprising an apparatus (1) and an irradiation target (11) carried on a carrier (12), the apparatus (1) including a light emitter (2) comprising a first laser light source (21) configured to emit a first light beam (211) and a second laser light source (22) configured to emit a second light beam (221) and an optical scanner (27), the method comprising:

emitting the first light beam (211) and the second light beam (221) by the light emitter (2);
scanning the light beams by the optical scanner (27);
converging the first light beam (211) on the carrier (12) and converging the second light beam (221) on an adherence target (3); and

causing the irradiation target (11) to fly by causing the first laser light source (21) to emit light on a surface carrying the irradiation target as a converging surface and the second laser light source (22) light on the adherence target as a converging surface to fix the irradiation target to the adherence target.

**Patentansprüche**

1. System mit einer Vorrichtung (1) und einem Bestrahlungsziel (11), das auf einem Träger (12) getragen wird, wobei die Vorrichtung (1) umfasst:

einen Lichtemitter (2), der eine erste Laserlichtquelle (21), die so konfiguriert ist, dass sie einen ersten Lichtstrahl (211) emittiert, und eine zweite Laserlichtquelle (22), die so konfiguriert ist, dass sie einen zweiten Lichtstrahl (221) emittiert, enthält;
einen optischen Scanner (27), der so konfiguriert ist, dass er den ersten und zweiten Lichtstrahl (211, 221) abtastet; und

ein beugendes optisches Element, das so konfiguriert ist, dass es den ersten Lichtstrahl auf den Träger (12) konvergieren lässt und den zweiten Lichtstrahl auf ein Anhaftungsziel (3) konvergieren lässt, wobei der Lichtemitter so konfiguriert ist, dass er das Bestrahlungsziel (11) zum Fliegen bringt, indem er die erste Laserlichtquelle (21) veranlasst, Licht auf eine Oberfläche zu emittieren, die das Bestrahlungsziel als konvergierende Oberfläche trägt, und die zweite Laserlichtquelle (22) veranlasst, Licht auf das Anhaftungsziel als konvergierende Oberfläche zu emittieren, um das Bestrahlungsziel an dem Anhaftungsziel zu fixieren.

2.  System nach Anspruch 1, ferner umfassend:

    einen Lichtleiter (23), der so konfiguriert ist, dass er die optischen Achsen des ersten Lichtstrahls und des zweiten Lichtstrahls aneinander anpasst und den ersten Lichtstrahl und den zweiten Lichtstrahl mit den angepassten optischen Achsen zu dem optischen Scanner (27) leitet,
    wobei der optische Scanner (27) so konfiguriert ist, dass er sowohl den ersten Lichtstrahl als auch den zweiten Lichtstrahl mit den angepassten optischen Achsen abtastet.

3.  System nach Anspruch 1, bei dem

    der Träger (12) eine dem Haftziel (3) zugewandte erste Oberfläche und eine der ersten Oberfläche gegenüberliegende zweite Oberfläche aufweist und das Bestrahlungsziel (11) auf der ersten Oberfläche trägt; und
    der Lichtemitter (2) so konfiguriert ist, dass er die zweite Oberfläche des Trägers (12) mit dem ersten Lichtstrahl bestrahlt und das Anhaftungsziel (3) mit dem zweiten Lichtstrahl durch den Träger (12) hindurch bestrahlt.

4.  System nach Anspruch 1 oder 3, bei dem der zweite Lichtstrahl ein Laserstrahl ist, der das Bestrahlungsziel (11) erhitzt und schmilzt.

5.  System nach einem der Ansprüche 1 bis 4, bei dem

    das Anhaftungsziel so konfiguriert ist, dass es in eine vorbestimmte Richtung bewegt werden kann; und
    der Lichtemitter so konfiguriert ist, dass er den ersten Lichtstrahl und den zweiten Lichtstrahl so emittiert, dass die optischen Achsen des ersten Lichtstrahls und des zweiten Lichtstrahls, die in einer Abtastrichtung orthogonal zu der vorbestimmten Richtung abgetastet werden, um einen vorbestimmten Winkel in einer Richtung entlang der vorbestimmten Richtung in Bezug auf eine Richtung gekippt werden, die orthogonal zu sowohl der vorbestimmten Richtung als auch der Abtastrichtung ist.

6.  System nach Anspruch 1, bei dem der zweite Lichtstrahl einen vorbestimmten charakteristischen Wert

$$M^2 = (\pi D/2\lambda)\tan(\theta/2)$$

hat,
wobei D für den Durchmesser der Strahltaille, $\theta$ für den vollen Divergenzwinkel und $\lambda$ für die Wellenlänge des Laserstrahls steht.

7.  System nach einem der Ansprüche 1 bis 6, bei dem

    der erste Lichtstrahl gepulstes Licht mit einer vorbestimmten Dauer ist; und
    der zweite Lichtstrahl gepulstes Licht mit einer Dauer, die größer oder gleich der vorgegebenen Dauer ist, oder Dauerlicht ist.

8.  System nach einem der Ansprüche 1 bis 7, bei dem der erste Lichtstrahl und der zweite Lichtstrahl die gleiche Wellenlänge haben, die einer Lichtabsorptionswellenlänge des Bestrahlungsziels (11) entspricht.

9.  System nach einem der Ansprüche 1 bis 7, bei dem

    der erste Lichtstrahl eine erste Wellenlänge hat, die einer Lichtabsorptionswellenlänge des Bestrahlungsziels (11) entspricht; und
    der zweite Lichtstrahl eine zweite Wellenlänge hat, die sich von der ersten Wellenlänge unterscheidet.

**10.** System nach Anspruch 9, ferner umfassend:
ein nichtlineares optisches Kristallelement, das so konfiguriert ist, dass es eine zweite Harmonische des ersten Lichtstrahls als den zweiten Lichtstrahl erzeugt.

**11.** Dreidimensionale Modelliervorrichtung, umfassend:
das System nach einem der Ansprüche 1 bis 10.

**12.** Verfahren, das von einem System durchgeführt wird, das eine Vorrichtung (1) und ein auf einem Träger (12) getragenes Bestrahlungsziel (11) umfasst, wobei die Vorrichtung (1) einen Lichtemitter (2), der eine erste Laserlichtquelle (21), die so konfiguriert ist, dass sie einen ersten Lichtstrahl (211) emittiert, und eine zweite Laserlichtquelle (22), die so konfiguriert ist, dass sie einen zweiten Lichtstrahl (221) emittiert, und einen optischen Scanner (27) enthält, wobei das Verfahren umfasst:

Aussenden des ersten Lichtstrahls (211) und des zweiten Lichtstrahls (221) durch den Lichtemitter (2);
Abtasten der Lichtstrahlen durch den optischen Scanner (27);
Konvergieren des ersten Lichtstrahls (211) auf den Träger (12) und Konvergieren des zweiten Lichtstrahls (221) auf ein Anhaftungsziel (3); und

Bewirken, dass das Bestrahlungsziel (11) fliegt, indem die erste Laserlichtquelle (21) Licht auf eine Oberfläche emittiert, die das Bestrahlungsziel als konvergierende Oberfläche trägt, und die zweite Laserlichtquelle (22) Licht auf das Anhaftungsziel als konvergierende Oberfläche emittiert, um das Bestrahlungsziel an dem Anhaftungsziel zu fixieren.

**Revendications**

**1.** Système comprenant un appareil (1) et une cible d'irradiation (11) portée sur un support (12), l'appareil (1) comprenant :

un émetteur de lumière (2) comprenant une première source de lumière laser (21) configurée pour émettre un premier faisceau lumineux (211) et une seconde source de lumière laser (22) configurée pour émettre un second faisceau lumineux (221) ;
un scanner optique (27) configuré pour balayer les premier et second faisceaux lumineux (211, 221) ; et
un élément optique diffractif configuré pour faire converger le premier faisceau lumineux vers le support (12) et faire converger le second faisceau lumineux vers une cible d'adhérence (3),
dans lequel l'émetteur de lumière est configuré pour faire voler la cible d'irradiation (11) en amenant la première source de lumière laser (21) à émettre de la lumière sur une surface portant la cible d'irradiation en tant que surface convergente et la seconde source de lumière laser (22) à émettre de la lumière sur la cible d'adhérence en tant que surface convergente pour fixer la cible d'irradiation à la cible d'adhérence.

**2.** Système selon la revendication 1, comprenant en outre :

un guide de lumière (23) configuré pour faire correspondre les axes optiques du premier faisceau lumineux et du second faisceau lumineux et guider le premier faisceau lumineux et le second faisceau lumineux ayant les axes optiques adaptés vers le scanner optique (27),
dans lequel le scanner optique (27) est configurer pour balayer à la fois le premier faisceau lumineux et le second faisceau lumineux ayant les axes optiques adaptés.

**3.** Système selon la revendication 1, dans lequel

le support (12) comprend une première surface faisant face à la cible d'adhérence (3) et une seconde surface opposée à la première surface et porte la cible d'irradiation (11) sur la première surface ; et
l'émetteur de lumière (2) est configuré pour irradier la seconde surface du support (12) avec le premier faisceau lumineux et pour irradier la cible d'adhérence (3) avec le second faisceau lumineux à travers le support (12).

**4.** Système selon la revendication 1 ou 3, dans lequel le second faisceau lumineux est un faisceau laser qui chauffe et fait fondre la cible d'irradiation (11).

**5.** Système selon l'une quelconque des revendications 1 à 4, dans lequel la cible d'adhérence est configurée pour être déplacée dans une direction prédéterminée ; et l'émetteur de lumière est configuré pour émettre le premier faisceau lumineux et le second faisceau lumineux de telle sorte que les axes optiques du premier faisceau lumineux et du second faisceau lumineux balayés dans une direction de balayage orthogonale à la direction prédéterminée sont inclinés d'un angle prédéterminé dans une direction le long la direction prédéterminée par rapport à une direction qui est orthogonale à la fois à la direction prédéterminée et à la direction de balayage.

**6.** Système selon la revendication 1, dans lequel le second faisceau lumineux a une valeur caractéristique prédéterminée

$$M^2 = (\pi D \ /2\lambda)\tan(\theta/2),$$

dans lequel D représente un diamètre de la taille du faisceau, $\theta$ représente l'angle complet de divergence du faisceau et $\lambda$ représente la longueur d'onde du faisceau laser.

**7.** Système selon l'une quelconque des revendications 1 à 6, dans lequel

le premier faisceau lumineux est une lumière pulsée d'une durée prédéterminée ; et
le second faisceau lumineux est une lumière pulsée d'une durée supérieure ou égale à la durée prédéterminée ou une lumière à onde continue.

**8.** Système selon l'une quelconque des revendications 1 à 7, dans lequel le premier faisceau lumineux et le second faisceau lumineux ont une même longueur d'onde correspondant à une longueur d'onde d'absorption de lumière de la cible d'irradiation (11).

**9.** Système selon l'une quelconque des revendications 1 à 7, dans lequel

le premier faisceau lumineux a une première longueur d'onde correspondant à une longueur d'onde d'absorption de lumière de la cible d'irradiation (11) ; et
le second faisceau lumineux a une seconde longueur d'onde différente de la première longueur d'onde.

**10.** Système selon la revendication 9, comprenant en outre :
un élément à cristal optique non linéaire configuré pour générer une seconde harmonique du premier faisceau lumineux en tant que second faisceau lumineux.

**11.** Appareil de modélisation tridimensionnelle, comprenant :
le système selon l'une quelconque des revendications 1 à 10.

**12.** Procédé mis en oeuvre par un système comprenant un appareil (1) et une cible d'irradiation (11) portée sur un support (12), l'appareil (1) comprenant un émetteur de lumière (2) comprenant une première source de lumière laser (21) configurée pour émettre un premier faisceau lumineux (211) et une seconde source de lumière laser (22) configurée pour émettre un second faisceau lumineux (221) et un scanner optique (27), le procédé comprenant :

l'émission du premier faisceau lumineux (211) et du second faisceau lumineux (221) par l'émetteur de lumière (2) ;
le balayage des faisceaux lumineux par le scanner optique (27) ;
la convergence du premier faisceau lumineux (211) sur le support (12) et la convergence du second faisceau lumineux (221) sur une cible d'adhérence (3) ; et
le vol de la cible d'irradiation (11) en amenant la première source de lumière laser (21) à émettre de la lumière sur une surface portant la cible d'irradiation en tant que surface convergente et la seconde source de lumière laser (22) à émettre de la lumière sur la cible d'adhérence en tant que surface convergente surface pour fixer la cible d'irradiation à la cible d'adhérence.

FIG.1

EP 3 800 033 B1

# FIG.2

EP 3 800 033 B1

# FIG.3

# FIG.4

EP 3 800 033 B1

## FIG.5A

~211

12
11

3
4

## FIG.5B

~221

12
11

3
4

# FIG.6

# FIG.7

# FIG.8

# FIG.9

# FIG.10A

# FIG.10B

# FIG.11

# FIG.12

# FIG.13

# FIG.14

# FIG.15A

# FIG.15B

# FIG.15C

# FIG.15D

# FIG.16A

EP 3 800 033 B1

# FIG.16B

37

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019077935 A
- US 7014885 B1
- US 20180193948 A1
- JP 2017124416 A